# FASCICULE DE BREVET EUROPEEN

(11) **EP 3 038 014 B1**
(45) Date de publication et mention de la délivrance du brevet: **07.02.2018**
(21) Numéro de dépôt: 15200224.2
(22) Date de dépôt: 15.12.2015
(51) Int. Cl.: G06K 9/00

(54) **DISPOSITIF ET PROCÉDÉ DE DÉTECTION D'UN ÉTAT D'OCCUPATION D'UN EMPLACEMENT**
VORRICHTUNG UND VERFAHREN ZUR DETEKTION DES BESETZUNGSZUSTANDS EINER STELLE
DEVICE AND METHOD FOR DETECTING AN OCCUPANCY STATE OF A LOCATION

(30) Priorité: 22.12.2014 FR 1463135
(43) Date de publication de la demande: 29.06.2016
(73) Titulaire: Orange, 75015 Paris (FR)
(72) Inventeur: LEGAY, Philippe, 22700 Louannec (FR); JENDOUBI, Ghassen, 22300 Lannion (FR); DESCOS, Jérôme, 22700 Louannec (FR); CARTIGNY, Jean, 22450 Quemperven (FR)
(74) Mandataire: Fontenelle, Sandrine

(56) Documents cités:
- US-A- 5 243 663
- US-A1- 2013 258 107
- CHING-CHUN HUANG ET AL: "A surface-based vacant space detection for an intelligent parking lot", ITS TELECOMMUNICATIONS (ITST), 2012 12TH INTERNATIONAL CONFERENCE ON, IEEE, 5 novembre 2012 (2012-11-05), pages 284-288, XP032327802, DOI: 10.1109/ITST.2012.6425183 ISBN: 978-1-4673-3071-8

## Description

### Arrière-plan de l'invention

L'invention se rapporte au domaine général des télécommunications.

Elle concerne plus particulièrement la détection d'un état d'occupation (ex. libre ou occupé) d'un emplacement se trouvant dans une zone surveillée par un capteur d'images.

L'invention a ainsi une application privilégiée mais non limitative dans le domaine de la surveillance de parkings et notamment de la détection de places de parking inoccupées. Elle peut toutefois s'appliquer à d'autres domaines dans lesquels la connaissance d'un état d'occupation d'un emplacement est critique, comme par exemple à la gestion d'emplacements de stockage de matériel, etc.

La détection des places de parking inoccupées est un enjeu important aujourd'hui pour fluidifier la circulation des véhicules dans un parking et optimiser le temps de recherche par l'automobiliste d'une place disponible pour se garer.

Plusieurs solutions ont été mises au point ces dernières années afin de faciliter le guidage de l'automobiliste vers une place inoccupée. En grande majorité, les solutions commercialisées s'appuient sur différents types de capteurs, tels que notamment des capteurs optiques, magnétiques ou ultrasoniques, qui sont aptes à détecter si une place est libre ou occupée. Ces capteurs sont positionnés au niveau de chaque place de parking, dans l'enrobé de la place ou au-dessus, et sont alimentés par le réseau électrique (auquel cas un câblage approprié est nécessaire) ou sont équipés d'une batterie longue durée (typiquement jusqu'à 10 ans). Ces capteurs sont en outre configurés de sorte à remonter les informations de disponibilité des places qu'ils surveillent par une liaison sans fil vers une station de collecte.

Ces solutions présentent toutefois un certain nombre de limites et sont relativement coûteuses. En effet, chaque place de parking doit être équipée d'un capteur, qui nécessite parfois d'être intégré dans l'enrobé de la place de parking (caractère potentiellement destructeur de l'intégration du capteur). En outre certains capteurs requièrent un câblage électrique pour fonctionner.

Pour limiter les coûts, des solutions de vidéo intelligente permettant de compter le nombre de places disponibles dans un parking à partir d'images capturées par une caméra ont été proposées. Toutefois ces solutions requièrent l'installation des caméras très en hauteur afin de bénéficier d'une vue plongeante sur la zone surveillée et permettre ce comptage.

US-A1-5 243 663 divulgue une solution selon le préambule des revendications 1 et 12.

### Objet et résumé de l'invention

L'invention pallie notamment les inconvénients précités en proposant un procédé de détection d'un état d'occupation d'au moins un emplacement se trouvant dans une zone surveillée par un capteur d'images, le procédé de détection comprenant :
- une étape d'obtention d'une image de la zone surveillée acquise par le capteur d'images ;
- une étape d'obtention d'un modèle numérique adapté à l'image et représentant des emplacements délimités dans la zone surveillée ;
- une étape de transformation de l'image en une image binaire comprenant des pixels d'une première couleur associée à un premier état d'occupation et des pixels d'une seconde couleur associée à un second état d'occupation ;
- une étape de comptage sur l'image binaire, pour au moins un emplacement représenté par le modèle numérique, d'un nombre de pixels appartenant à au moins une partie de cet emplacement et ayant une couleur sélectionnée parmi la première et la seconde couleur ; et
- une étape de détection d'un état d'occupation dudit au moins un emplacement en comparant le nombre de pixels compté pour cet emplacement par rapport à un seuil prédéterminé ;
et dans lequel le modèle numérique est un modèle tridimensionnel représentant un emplacement de la zone surveillée à l'aide d'au moins une face délimitant le volume associé à cet emplacement, ladite au moins une partie sur laquelle est compté le nombre de pixels lors de l'étape de comptage comprenant au moins une dite face délimitant le volume associé à cet emplacement.

Corrélativement, l'invention vise aussi un dispositif de détection d'un état d'occupation d'au moins un emplacement se trouvant dans une zone surveillée par un capteur d'images, ce dispositif de détection comprenant :
- un module d'obtention d'une image de la zone surveillée acquise par le capteur d'images ;
- un module d'obtention d'un modèle numérique adapté à l'image et représentant des emplacements délimités dans la zone surveillée ;
- un module de transformation de l'image en une image binaire comprenant des pixels d'une première couleur associée à un premier état d'occupation et des pixels d'une seconde couleur associée à un second état d'occupation ;
- un module de comptage sur l'image binaire, pour au moins un emplacement représenté par le modèle numérique, d'un nombre de pixels appartenant à au moins une partie d'un volume associé à cet emplacement par le modèle numérique et ayant une couleur sélectionnée parmi la première et la seconde couleur ; et
- un module de détection d'un état d'occupation dudit au moins un emplacement en comparant le nombre de pixels compté pour cet emplacement par rapport à un seuil prédéterminé ;
et dans lequel le modèle numérique est un modèle tridimensionnel représentant un emplacement de la zone surveillée à l'aide d'au moins une face délimitant le volume associé à cet emplacement, ladite au moins une partie sur laquelle est compté le nombre de pixels lors de l'étape de comptage comprenant au moins une dite face délimitant le volume associé à cet emplacement.

Ainsi, l'invention propose une solution autonome, robuste et performante permettant de déterminer l'état d'occupation d'un emplacement à partir d'images acquises d'une zone surveillée, par exemple au moyen d'une caméra vidéo ou d'un appareil photographique « connecté ». Un tel emplacement est par exemple une place de parking, un emplacement de stockage de matériel, etc., susceptible d'être occupée par un objet (ex. voiture), et son état d'occupation est par exemple libre (ou vacant ou disponible, etc.) ou occupé.

A cet effet, l'invention s'appuie sur le traitement d'une image (telle une photographie ou une image vidéo) de la zone comprenant les emplacements surveillés à l'aide d'un modèle numérique représentant ces emplacements et adapté à l'image acquise par le capteur. Par « adapté à l'image » on entend ici que le modèle numérique est représentatif des emplacements qui apparaissent sur cette image, et notamment de leur géométrie, de leur orientation par rapport à l'angle de prise de vue de l'image, et de leur agencement dans la zone surveillée et les uns par rapport aux autres.

Ce modèle numérique peut être élaboré ou configuré au préalable, par exemple par une entité différente du dispositif de détection (ex. par un ordinateur de type PC (pour « Personal Computer ») raccordé au dispositif de détection), à partir d'une image de la zone acquise par le capteur d'images (en identifiant par exemple les limites au sol des emplacements de la zone surveillée représentée sur cette image, etc.), et être fourni au dispositif de détection par cette entité. Il peut ensuite être mis à jour par une entité distante ou par le dispositif de détection luimême, pour être adapté à l'image et prendre en compte de légers changements de position ou de configuration du capteur d'images (et notamment un changement de l'angle de prise de vue du capteur d'images). La fiabilité de la détection réalisée est améliorée et on évite une intervention sur le dispositif de détection in situ.

Ce modèle numérique définit une surface de référence sur l'image sur laquelle conformément à l'invention, on compte les pixels occupés et/ou vacants pour en déduire un état d'occupation des emplacements présents dans la zone surveillée. Plus spécifiquement, l'image acquise de la zone surveillée est transformée en une image binaire, autrement dit comprenant des pixels de deux couleurs (ex. noir et blanc), une couleur étant associée à un état occupé de l'emplacement et l'autre à un état libre. En recoupant le modèle numérique avec l'image binaire et en comptabilisant simplement pour chaque emplacement les pixels de l'image binaire qui ont une certaine couleur, on peut en déduire aisément et de manière fiable l'état d'occupation de l'emplacement considéré. A cet effet, l'invention considère une simple comparaison par rapport à un seuil, qui peut être fixé en fonction de différents paramètres, comme décrit plus en détail ultérieurement.

L'invention offre donc une solution globale en ce qu'elle permet la surveillance et la détection des états d'occupation de tous les emplacements placés dans le champ de vision du capteur d'images et permet ainsi de s'affranchir du déploiement d'un capteur par emplacement surveillé. La connaissance de l'état de chaque emplacement permet notamment de signaler le nombre d'emplacements libres dans la zone surveillée mais également la localisation de ces emplacements.

La solution apportée par l'invention est en outre non destructrice contrairement à certaines techniques connues, le capteur d'images et le dispositif de détection traitant cette image conformément à l'invention n'ayant pas à être intégrés dans l'emplacement ou l'enrobé de l'emplacement à proprement parler.

Un placement approprié du ou des capteurs d'images permet en outre de s'adapter à différentes configurations de l'espace ou de la structure (ex. parking) que l'on souhaite gérer et surveiller, sans toutefois nécessiter un placement de ce ou ces capteurs à des hauteurs trop importantes. Le modèle numérique considéré pour déterminer l'état d'occupation d'un emplacement est en effet adapté à l'image de sorte à tenir compte des effets de perspective induits par la position et la configuration du capteur d'images.

L'invention peut donc être déployée partout sous réserve d'une alimentation électrique pour procéder au traitement des images de la zone surveillée acquises par le capteur. Le procédé selon l'invention peut en effet être typiquement intégré dans une solution logicielle portée directement sur l'équipement qui intègre le capteur d'images (ex. caméra vidéo) ou sur un ordinateur relié à celui-ci. On obtient ainsi une solution facilement configurable pour intégrer de nouvelles zones surveillées, cette configuration pouvant en outre être réalisée à distance.

En outre, moyennant une connexion internet filaire ou radio (ex. 2.5G, 3G ou 4G), les résultats de la détection opérée conformément à l'invention peuvent être rendus disponibles facilement, par exemple à une plateforme de service gérant la zone surveillée. Une telle connexion peut également permettre de configurer à distance le dispositif de détection.

Comme mentionné précédemment le modèle numérique est un modèle tridimensionnel représentant un emplacement de la zone surveillée à l'aide d'au moins une face délimitant le volume associé à cet emplacement, ladite au moins une partie sur laquelle est compté le nombre de pixels lors de l'étape de comptage comprenant au moins une dite face délimitant le volume associé à cet emplacement.

Ce modèle numérique est par exemple construit à partir de l'image acquise par le capteur d'images au cours d'une étape de construction du procédé selon l'invention comprenant :
- la sélection sur l'image d'une surface comprenant une pluralité d'emplacements représentés dans leur intégralité sur l'image ;
- la construction d'un premier maillage sur la surface délimitant les emplacements ;
- la construction à partir du premier maillage d'un deuxième maillage dans un plan parallèle à un plan du premier maillage ;
- la définition du volume associé à chaque emplacement à partir du premier maillage et du deuxième maillage ; et
- la sélection d'au moins une face délimitant le volume associé à chaque emplacement pour représenter cet emplacement.

Les pixels qui sont comptabilisés pour déterminer l'état d'occupation d'un emplacement ne sont donc pas nécessairement comptabilisés sur toutes les faces délimitant le volume associé à l'emplacement mais sur certaines faces seulement. Ces faces peuvent être notamment sélectionnées en fonction de leur pertinence au regard de l'emplacement considéré compte tenu notamment de l'angle de prise de vue de l'image et de la perspective de l'image. Ainsi, les faces considérées pour comptabiliser les pixels lors de l'étape de comptage peuvent varier d'un emplacement à l'autre, d'une rangée d'emplacements à l'autre, d'une image à l'autre, etc., pour palier en particulier les effets de masquage dus à la perspective de l'image.

Typiquement, ladite au moins une face sur laquelle est compté le nombre de pixels lors de l'étape de comptage dépend d'une perspective de la zone surveillée sur l'image et/ou de la position de l'emplacement sur l'image.

De cette sorte le modèle s'adapte facilement à différentes configurations et profondeurs de parking.

En outre, le recours à un modèle tridimensionnel permet de prendre en compte la forme plus souvent tridimensionnelle des objets susceptibles d'occuper un emplacement, et de pouvoir détecter par un choix approprié des faces considérées lors du comptage, des emplacements non occupés quand bien même ceux-ci sont en partie masqués par un objet se trouvant sur un autre emplacement à proximité (par exemple devant l'emplacement inoccupé en direction de la caméra).

De façon similaire, le seuil considéré pour déterminer l'état d'occupation d'un emplacement n'est pas nécessairement le même pour tous les emplacements de la zone surveillée représentée sur l'image.

Par exemple, ce seuil peut dépendre du nombre de faces délimitant le volume associé à l'emplacement sur lequel sont comptés les pixels et/ou d'une surface occupée par ces faces.

Il peut également évoluer dans le temps, notamment en fonction de la luminosité.

Ceci permet d'améliorer la précision de la détection réalisée par l'invention.

Une autre façon d'améliorer la précision de la détection réalisée par l'invention et sa fiabilité peut être de comparer les résultats obtenus à l'issue de la détection avec ceux obtenus lors de l'analyse d'une image précédente (par exemple résultats obtenus pour une image prise à l'instant t comparés avec les résultats obtenus pour une image prise à l'instant t-1). En effet, une voiture se trouvant sur un emplacement donné peut avoir des impacts sur les emplacements adjacents mêmes si ceux-ci sont minimisés par le choix des faces prises en compte pour compter les pixels. Disposer et analyser les états d'occupation à l'instant précédent va permettre d'affiner les prises de décision en analysant pour chaque place et ses voisines, la stabilité des calculs dans le temps et les variations.

La fréquence d'analyse des images est bien entendu paramétrable.

Ainsi, dans une variante de réalisation de l'invention, le procédé de détection comprend en outre une étape de comparaison de l'état d'occupation détecté dudit au moins un emplacement avec un état d'occupation détecté précédemment pour ledit au moins un emplacement.

Dans un mode particulier de réalisation, l'étape de transformation de l'image comprend :
- l'obtention d'une image codée en niveaux de gris à partir de l'image acquise par le capteur d'images ;
- l'application d'un traitement à l'image codée en niveaux de gris de sorte à révéler des contours d'objets présents dans la zone surveillée ; et
- la transformation de l'image traitée en une image binaire en noir et blanc.

Dans un autre mode de réalisation, l'étape de transformation de l'image comprend en outre la dilation de l'image binaire en noir et blanc de sorte à amplifier un nombre de pixels représentatifs des contours des objets positionnés dans la zone surveillée.

Dans un autre mode de réalisation encore, l'étape de transformation de l'image comprend en outre l'ajustement d'une intensité de l'image codée en niveaux de gris avant l'application du traitement.

Ces différents traitements visent à faciliter l'exploitation de l'image acquise par le capteur d'images et l'identification des emplacements occupés. Leur mise en oeuvre rend ainsi plus robuste la détection réalisée conformément à l'invention.

Dans un mode particulier de réalisation, le procédé de détection selon l'invention comprend en outre :
- une étape de comptage d'un nombre d'emplacements de ladite zone surveillée se trouvant dans le premier état d'occupation et/ou d'un nombre d'emplacements de ladite zone surveillée se trouvant dans le second état d'occupation ; et
- une étape de transmission de ce nombre à une plateforme de service apte à gérer la zone surveillée.

L'invention offre ainsi une information complémentaire sur le nombre d'emplacements occupés ou vacants dans la zone surveillée. Cette information peut être transmise notamment à une plateforme de service afin de faciliter la surveillance de la zone.

Dans un mode particulier de réalisation, les différentes étapes du procédé de détection sont déterminées par des instructions de programmes d'ordinateurs.

En conséquence, l'invention vise aussi un programme d'ordinateur sur un support d'informations, ce programme étant susceptible d'être mis en oeuvre dans un dispositif de détection ou plus généralement dans un ordinateur, ce programme comportant des instructions adaptées à la mise en oeuvre des étapes d'un procédé de détection tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un autre aspect, l'invention vise aussi un système de surveillance comprenant :
- au moins un capteur d'images ; et
- un dispositif selon l'invention de détection d'un état d'occupation d'au moins un emplacement se trouvant dans une zone surveillée par ledit au moins un capteur d'images.

Le dispositif de détection selon l'invention et le capteur d'images peuvent être embarqués au sein d'une même unité matérielle, telle que par exemple une caméra vidéo intelligente. Ainsi, l'invention vise également une caméra vidéo comprenant :
- un capteur d'images apte à acquérir au moins une image d'une zone surveillée par l'unité de surveillance ; et
- un dispositif de détection selon l'invention apte à obtenir ladite image et à détecter à partir de cette image un état d'occupation d'au moins un emplacement se trouvant dans la zone surveillée.

Autrement dit, la détection de l'état d'occupation des emplacements de la zone surveillée par le capteur d'images se fait in situ, par la caméra vidéo ou plus généralement par l'unité intégrant le capteur d'images. L'avantage d'une telle configuration est qu'elle permet d'éviter la transmission d'images à des équipements distants qui peut s'avérer consommatrice en bande passante.

En variante, le dispositif de détection selon l'invention peut être déporté sur une unité de traitement distincte du capteur d'images, tel que par exemple un ordinateur, disposé à proximité et raccordé à celui-ci. On peut alors utiliser des capteurs d'images ayant des ressources plus limitées qu'une caméra vidéo comme par exemple un simple appareil photographique.

Dans une autre variante encore, le dispositif de détection selon l'invention est déporté sur une unité de traitement distante, par exemple sur un serveur avec lequel le capteur d'images communique via un réseau de télécommunications. Cette solution permet avantageusement de réutiliser des capteurs d'image déployés, comme par exemple les caméras existantes positionnées autour d'une zone surveillée et déjà connectées par des liens optiques ou ADSL (Asymmetric Digital Subscriber Line).

Dans un mode particulier de réalisation, le système de surveillance peut comprendre en outre une plateforme de service, et :
- le dispositif de détection comprend en outre un module de transmission à la plateforme de service d'une information représentative d'un état d'occupation d'au moins un emplacement de la zone surveillée ; et
- ladite plateforme de service comprend un module de traitement de cette information.

Autrement dit, le dispositif de détection selon l'invention peut être facilement couplé à une plateforme de gestion de la zone surveillée. Le dispositif de détection analyse en temps réel l'état d'occupation de la zone qu'il est tenu de surveiller et remonte automatiquement à la plateforme de service des informations sur cet état d'occupation ce qui facilite la gestion de la zone par la plateforme de service.

Le dispositif de détection peut également être couplé à d'autres équipements comme par exemple une plateforme vidéo apte à visualiser en temps réel les images acquises par le capteur d'images.

En outre, le dispositif de détection peut être configurable à distance. Ainsi par exemple, au moins un paramètre utilisé lors de la détection (ex. paramètres du modèle numérique, seuils considérés lors du traitement d'image, etc.) et/ou un paramètre utilisé pour la transmission d'informations à la plateforme de services peut être configuré à distance.

La caméra et le système selon l'invention bénéficient des mêmes avantages cités précédemment que le procédé et le dispositif de détection.

On peut en outre également envisager, dans d'autres modes de réalisation, que le procédé de détection, le dispositif de détection, le capteur d'images, et le système de surveillance selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système de surveillance conforme à l'invention dans un mode particulier de réalisation ;
- la figure 2 représente l'architecture matérielle d'une caméra vidéo conforme à l'invention dans un mode particulier de réalisation ;
- la figure 3 représente, sous forme d'ordinogramme, les principales étapes d'un procédé de détection selon l'invention ;
- la figure 4 représente, sous forme d'ordinogramme, les principales étapes mises en oeuvre pour construire un modèle numérique tel qu'utilisé dans l'invention ;
- les figures 5A à 5E illustrent sur une image la construction du modèle numérique selon le procédé de la figure 4 ; et
- les figures 6A à 6F illustrent sur une image un traitement appliqué par le dispositif de détection selon l'invention pour transformer une image en couleurs en une image en noir et blanc, dans un mode particulier de réalisation.

### Description détaillée de l'invention

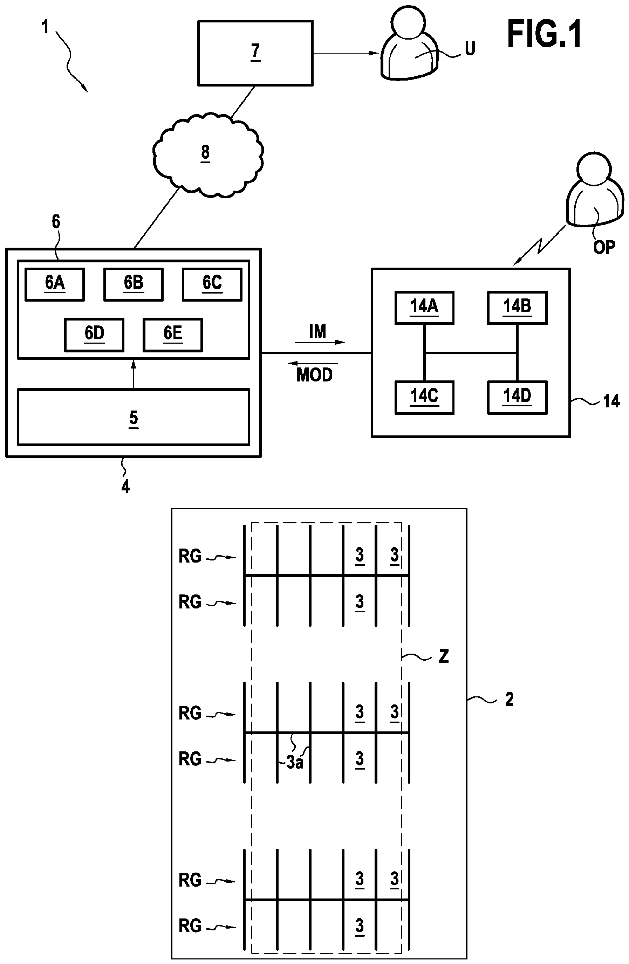

La **figure 1** représente, dans son environnement, un système de surveillance 1 conforme à l'invention, dans un mode particulier de réalisation.

Dans l'exemple envisagé à la figure 1, le système de surveillance 1 permet la surveillance d'un parking 2 comprenant une pluralité d'emplacements 3 semi-ouverts délimités au sol, et organisés selon plusieurs rangées RG. Chaque emplacement 3 est ici délimité par trois segments 3A définissant un rectangle « virtuel » (dans le sens où celui-ci est ouvert sur l'un de ses côtés), à savoir deux segments latéraux (gauche et droite) parallèles et un segment orthogonal aux segments latéraux, marquant le fond de l'emplacement considéré.

En variante, chaque emplacement 3 peut être délimité par un nombre différent de segments (par exemple 4 pour un emplacement rectangulaire fermé ou plus le cas échéant pour un autre type de polygone).

Le système de surveillance 1 permet avantageusement ici de détecter l'état d'occupation d'un emplacement 3 du parking afin de pouvoir signaler par exemple à un utilisateur U (ex. un automobiliste) le nombre d'emplacements et/ou les emplacements à proprement parler qui sont disponibles et qu'il peut occuper. L'invention peut toutefois bien entendu s'appliquer dans d'autres contextes que la surveillance d'un parking dans lesquels il est pertinent de déterminer l'état d'occupation d'un emplacement délimité sur une zone ou une surface donnée.

Dans le mode de réalisation décrit ici, le système de surveillance 1 comprend :
- au moins une caméra vidéo 4, conforme à l'invention, équipée d'un capteur d'images 5 (vidéo) et d'un dispositif de détection 6 conforme à l'invention ; et
- une plateforme de service 7 permettant la gestion du parking 2 et attribuée à un exploitant du parking 2, à laquelle la caméra vidéo 4 est apte à communiquer des informations sur l'état d'occupation d'emplacements 3 du parking, via ici un réseau de télécommunications 8. Aucune limitation n'est attachée à la nature du réseau 8, il peut s'agir ainsi d'un réseau filaire, d'un réseau de télécommunications mobile ou sans fil, etc.

La caméra vidéo 4 est disposée en hauteur et configurée pour acquérir, via le capteur d'images 5, des images vues du haut et en perspective d'une zone Z du parking 2. Les images acquises donnent ainsi une vue d'ensemble de la surface au sol de la zone Z considérée et des objets occupant cette surface au sol (typiquement dans l'exemple envisagé ici, de véhicules garés sur les emplacements délimités au sol dans la zone considérée).

Pour permettre la surveillance de l'intégralité du parking 2, le système de surveillance 1 peut bien entendu disposer d'une pluralité de caméras vidéo 4, chacune dédiée à la surveillance d'une zone limitée du parking 2, les zones surveillées pouvant bien entendu se recouper pour couvrir tous les emplacements 3 proposés par le parking 2. L'homme du métier ne rencontrerait aucune difficulté à positionner de telles caméras.

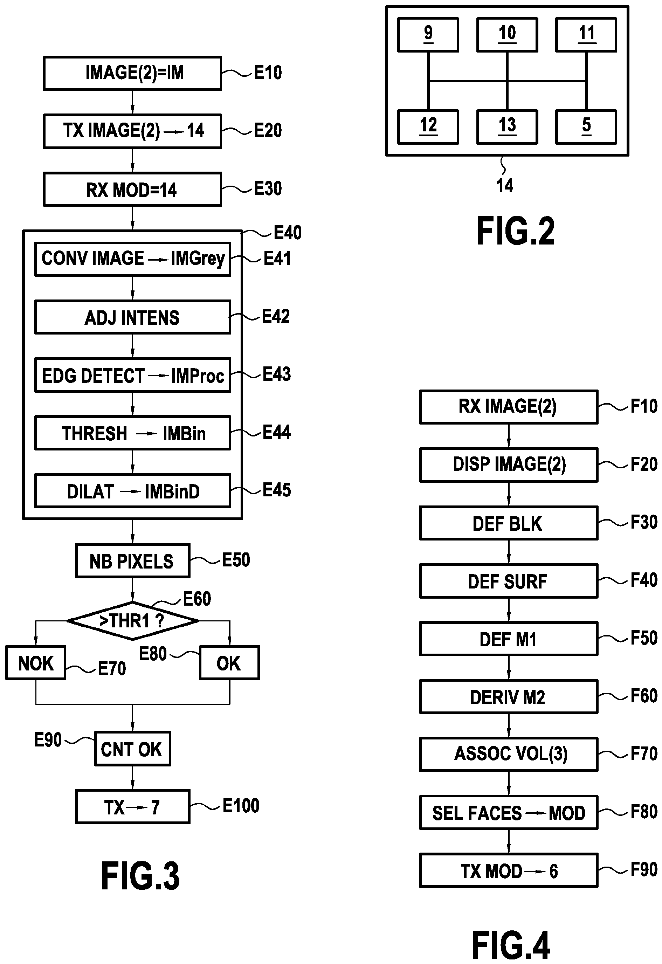

Dans le mode de réalisation décrit ici, la caméra vidéo 4 a l'architecture matérielle d'un ordinateur, telle que représentée à la **figure 2****,** et sur laquelle s'appuie le dispositif de détection 6 selon l'invention.

Ainsi, outre le capteur d'images vidéo 5, elle comprend notamment un processeur 9, une mémoire morte 10, une mémoire vive 11, une mémoire réinscriptible non volatile 12 et un module de communication 13 lui permettant en particulier de communiquer avec la plateforme de service 7 via le réseau de télécommunications 8.

Le module de communication 13 inclut également, dans le mode de réalisation décrit ici, un moyen de connexion permettant de relier le dispositif de détection 6 à moyen de connexion 14A d'un ordinateur 14 de type PC (ou Personal Computer en anglais). Ce moyen de connexion peut être notamment un port USB, une interface sans fil (ex. WiFI (Wireless FIdelity) ou Bluetooth), etc.

L'ordinateur 14 est utilisé pour configurer le dispositif de détection 6 comme détaillé ultérieurement. Il est équipé à cet effet de moyens d'entrée/sortie 14B (ex. une souris, un clavier, etc.), de moyens d'affichage 14C (ex. un écran) et d'un module 14D de construction d'un modèle numérique à partir notamment d'informations saisies via les moyens d'entrée/sortie 14B.

La mémoire morte 10 de la caméra vidéo 4 constitue un support d'enregistrement conforme à l'invention, lisible par le processeur 9 et sur lequel est enregistré un programme d'ordinateur conforme à l'invention comportant des instructions pour l'exécution des étapes d'un procédé de détection selon l'invention tel qu'il est mis en oeuvre par le dispositif de détection 6 et dont les étapes sont illustrées ultérieurement en référence à la figure 3.

Ce programme d'ordinateur définit de façon équivalente des modules fonctionnels du dispositif de détection 6 (modules logiciels ici), et notamment ici un module 6A d'obtention d'une image de la zone Z du parking 2 surveillée par le capteur d'images 5, un module 6B d'obtention d'un modèle numérique adapté à cette image, un module 6C de transformation de cette image en une image binaire, un module 6D de comptage de pixels d'une couleur prédéterminée sur cette image, un module 6E de détection d'un état d'occupation des emplacements représentés sur l'image et un module 6F d'envoi d'informations sur cet état d'occupation à la plateforme de service 7. Les fonctions des modules 6A à 6F sont détaillées davantage ultérieurement en référence aux étapes du procédé de détection selon l'invention.

Nous allons maintenant décrire, en référence à la **figure 3****,** les principales étapes mises en oeuvre lors du procédé de détection selon l'invention dans un mode particulier de réalisation dans lequel il est mis en oeuvre par le dispositif de détection 6 embarqué dans la caméra vidéo 4.

Dans le mode de réalisation décrit ici, on suppose qu'une configuration préalable de la caméra vidéo 4 une fois celle-ci positionnée en hauteur, et plus particulièrement du dispositif de détection 6, est mise en oeuvre à partir de l'ordinateur 14 connecté localement à la caméra vidéo 4 par l'intermédiaire de son module de communication 13. Cette configuration vise à fournir au dispositif de détection 6 un modèle numérique MOD représentant les emplacements 3 délimités au sol dans la zone Z du parking 2 surveillée par le capteur d'images 5.

Le modèle numérique MOD est ici construit par l'ordinateur 14 à partir d'une image de la zone Z et d'informations saisies via les moyens d'entrée/sortie 14B de l'ordinateur 14. Ainsi, sur requête de l'ordinateur 14, le capteur d'images 5 acquiert une image IM de la zone Z qu'il visualise (étape E10). L'image IM est ici une image vidéo, en couleurs, toutefois ces hypothèses ne sont pas limitatives et l'image IM peut être également une photographie selon la nature du capteur d'images utilisé. En outre il peut s'agir d'une image codée en niveaux de gris.

Le capteur d'images 5 fournit l'image IM au module 6A du dispositif de détection 6. Celui-ci l'envoie à l'ordinateur 14 par l'intermédiaire de son module de communication 13 (étape E20).

La **figure 4** illustre brièvement les étapes mises en oeuvre par l'ordinateur 14 pour construire le modèle numérique MOD à partir de l'image IM reçue du dispositif de détection 6. L'élaboration du modèle numérique MOD est réalisée ici sous intervention humaine, avec l'aide d'un opérateur OP utilisant les moyens d'entrée/sortie 14B de l'ordinateur 14 pour configurer le modèle MOD à partir de l'image IM. Par exemple, cette configuration peut se faire par l'intermédiaire d'une interface utilisateur s'appuyant sur une page web en html qui permet à l'opérateur de saisir différents paramètres permettant la construction du modèle numérique MOD comme indiqué plus en détail ci-après.

Plus précisément, sur réception de l'image IM par l'ordinateur 14 via son moyen de connexion 14A (étape F10), l'ordinateur 14 affiche l'image IM sur son écran 14C. L'opérateur OP définit (i.e. délimite), en utilisant les moyens d'entrée/sortie 14B de l'ordinateur (ex. souris), différents blocs d'emplacements de parking dans la zone Z surveillée par la caméra vidéo 4. Chaque bloc ainsi défini comprend une pluralité d'emplacements 3 (pas nécessairement le même nombre toutefois).

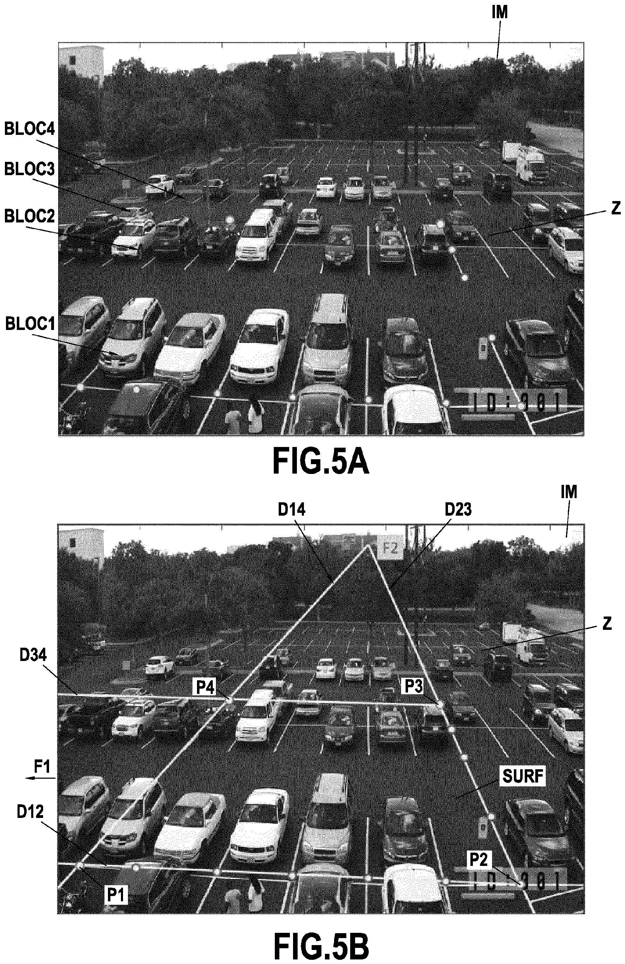

La **figure 5A** illustre à titre d'exemple une image IM d'une zone Z d'un parking sur laquelle quatre blocs d'emplacements de parking, désignés respectivement par BLOC1, BLOC2, BLOC3 et BLOC4, sont délimités. Dans l'exemple illustré sur cette figure, chaque bloc correspond à une rangée RG de places. Cette hypothèse n'est toutefois pas limitative et on pourrait bien entendu envisager notamment la définition de blocs comprenant plusieurs rangées de places ou organisés différemment.

La définition de ces blocs permet de considérer aisément, lors de la construction du modèle MOD, des hypothèses de configuration du modèle (ou de manière équivalente un paramétrage) spécifiques pour chaque bloc, en fonction de sa proximité au capteur d'images 5 (sur la figure 5A, le capteur d'images 5 est positionné en hauteur à proximité du bloc BLOC1), comme expliqué plus en détail ultérieurement.

Puis, l'opérateur OP définit, toujours via les moyens d'entrée/sortie 14B, une surface SURF comprise dans la zone Z et à partir de laquelle le modèle numérique MOD va être élaboré (étape F40). Cette surface SURF est sélectionnée de sorte à contenir intégralement une pluralité d'emplacements 3.

La **figure 5B** illustre sur l'exemple de la figure 5A une surface SURF délimitée par l'opérateur OP.

Pour définir cette surface, l'opérateur OP sélectionne ici sur l'image IM affichée à l'écran quatre points P1, P2, P3 et P4 désignant les quatre sommets d'un quadrilatère définissant la surface SURF qu'il souhaite considérer. Ces sommets coïncident ici avec les extrémités de segments 3A délimitant des emplacements compris dans la zone Z.

On note par ailleurs que tous les emplacements contenus dans la surface SURF sélectionnée le sont dans leur intégralité. Par « emplacement contenu dans son intégralité » on entend ici que l'emplacement est contenu tel qu'il est délimité au sol par les trois segments 3A mentionnés précédemment et par un quatrième segment virtuel, orthogonal aux segments latéraux et reliant ceux-ci à la seconde extrémité de l'emplacement (i.e. celle qui n'est pas marquée au sol).

A partir des quatre points P1, P2, P3 et P4, le module 14C de l'ordinateur 14 détermine deux points de fuite F1 et F2 correspondant respectivement :
- à l'intersection de la droite D12 passant par les points P1 et P2, et de la droite D34 passant par les points P3 et P4 (point de fuite F1). Autrement dit, le point de fuite F1 est l'intersection des droites passant par les extrémités des places contenues dans la surface SURF et tracées dans le sens de la largeur de ces places. Le point de fuite F1 n'est pas représenté sur la figure 5B car il se trouve très à gauche, en dehors de l'image IM (quasiment à l'infini les droites D12 et D34 étant quasi parallèles dans l'exemple envisagé à la figure 5A) ; et
- à l'intersection de la droite D14 passant par les points P1 et P4, et de la droite D23 passant par les points P2 et P3 (point de fuite F2). Autrement dit, le point de fuite F2 est l'intersection des droites passant par les extrémités des places contenues dans la surface SURF et tracées dans le sens de la longueur de ces places.

Puis à partir des points de fuite F1 et F2, le module 14C de l'ordinateur 14 construit un premier maillage « au sol » M1 de la surface SURF ainsi délimitée (étape F50). Ce maillage M1 est construit ici avec l'intervention de l'opérateur OP qui pointe et sélectionne, à l'aide de la souris 14B, les extrémités des emplacements compris dans la surface SURF de sorte à définir les différentes mailles m1 du maillage M1. Ainsi, à l'issue de l'étape F50, chaque emplacement est délimité par une maille m1 du maillage M1.

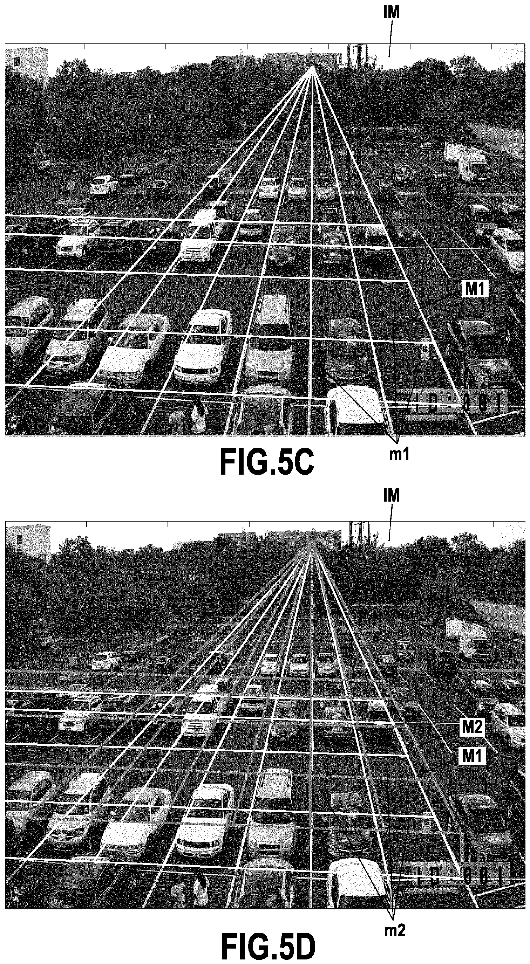

Il convient de noter que les mailles m1 du maillage M1 ne sont pas nécessairement uniformes sur toute la surface SURF comme illustré à la **figure 5C**. Ceci est dû notamment à l'effet de perspective oblique de l'image prise par le capteur d'images 5, et au fait que les zones qui séparent deux rangées d'emplacements pour permettre le passage des véhicules ne sont pas nécessairement de la même largeur que les rangées elles-mêmes.

En variante, le maillage M1 peut être construit par le module 14C de manière automatique, c'est-à-dire sans l'intervention de l'opérateur OP. A cet effet, le module 14C peut mettre en oeuvre un procédé de reconnaissance des lignes blanches délimitant les emplacements à partir d'un filtrage approprié de l'image. Ce filtrage s'appuie sur différentes techniques de traitement d'images connues de l'homme du métier, comme par exemple la détection de contours d'objets (places ici), la dilation et le seuillage.

Un second maillage M2 est ensuite dérivé du premier maillage M1 par le module 14C de l'ordinateur 14 (étape F60). Ce second maillage M2 est obtenu en translatant dans le sens vertical, d'une hauteur H, le maillage au sol M1. La valeur de la hauteur H peut être prédéterminée ou être paramétrée par l'opérateur OP via les moyens d'entrée/sortie 14B de l'ordinateur 14 (par exemple via son clavier). Cette valeur H a pour but de prendre en compte la hauteur des véhicules présents dans la surface SURF, et désigne ici la hauteur maximale susceptible d'être atteinte par ces véhicules. On désigne par m2 les mailles obtenues en translatant chaque maille m1 du maillage M1 d'une hauteur H.

Le second maillage M2 dérivé du maillage M1 représenté à la figure 5C est illustré sur la **figure 5D****.**

Le module 14C définit et associe alors, à partir des deux maillages M1 et M2 ainsi construits, un volume virtuel VOL à chaque emplacement 3 présent dans la surface SURF. Chaque volume associé à un emplacement 3 est délimité par une pluralité de faces latérales obtenues en reliant les extrémités de la maille m1 du maillage M1 délimitant l'emplacement 3 aux extrémités correspondantes de la maille m2 du maillage M2 obtenue par translation de la maille m1 (étape F70). Dans l'exemple envisagé ici, chaque emplacement ayant une forme rectangulaire, il est délimité par cinq faces, à savoir deux faces latérales gauche et droite, une face avant, une face arrière, une face de base au sol. La face délimitant le dessus de l'emplacement et située à une hauteur H de la face de base au sol n'est pas considérée ici.

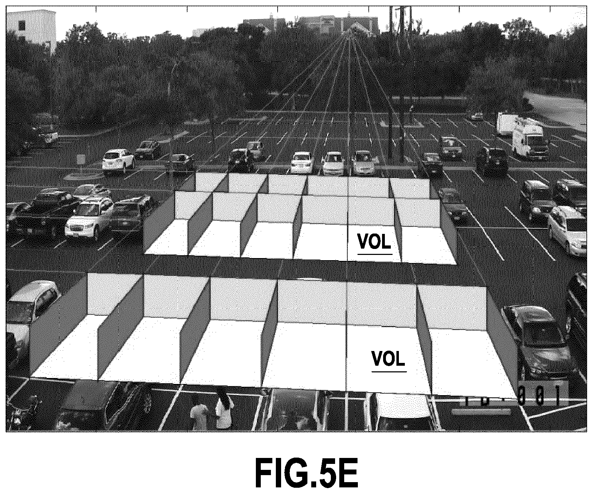

Puis, dans le mode de réalisation décrit ici, une partie seulement des faces délimitant le volume VOL associé à chaque emplacement 3 est sélectionnée par le module 14C pour représenter cet emplacement dans le modèle numérique MOD (étape F80). Une telle sélection est illustrée à la **figure 5E****.**

Cette sélection peut résulter d'un choix réalisé par l'opérateur OP par l'intermédiaire des moyens d'entrée/sortie 14B, par exemple en sélectionnant sur l'écran de l'ordinateur 14 à l'aide de la souris les faces du volume VOL que l'opérateur souhaite conserver pour chaque emplacement ou pour un emplacement de chaque bloc défini à l'étape F30.

Dans le mode de réalisation décrit ici, le nombre de faces sélectionnées pour chaque emplacement 3 de la surface SURF dépend du bloc auquel appartient cet emplacement (bloc défini à l'étape F30) de sorte à prendre en compte la perspective oblique de l'image et les faces qui peuvent être visualisées par l'opérateur pour chaque bloc. Autrement dit, les faces qui sont sélectionnées dépendent ici d'une perspective de la surface SURF sur l'image IM et de la position de l'emplacement 3 considéré sur l'image IM.

Ainsi, par exemple, pour les emplacements contenus dans les blocs BLOC1 et BLOC2, l'opérateur OP sélectionne quatre faces, à savoir, les faces latérales gauche et droite, la face de base au sol et la face du fond. Pour les emplacements contenus dans les blocs BLOC3 et BLOC4, l'opérateur OP sélectionne seulement trois faces, à savoir, les faces latérales gauche et droite et la face du fond, la face de base au sol étant masquée par les véhicules se trouvant au niveau des blocs précédents.

En variante, la sélection des faces à considérer pour chaque emplacement peut être réalisée automatiquement par le module 14C à l'aide de paramètres prédéfinis pour chacun des blocs. Ainsi, notamment, le module 14C peut être configuré de sorte à sélectionner pour le premier bloc BLOC1 (i.e. celui se trouvant le plus à proximité du capteur d'images 5) les cinq faces délimitant chaque volume, puis appliquer un coefficient correcteur spécifique à chaque bloc visant à réduire le nombre de faces sélectionnées au fur et à mesure que l'on s'éloigne du capteur d'images 5, et ce de sorte à prendre en compte un effet de perspective de l'image. Ce coefficient correcteur ainsi que les faces prises en compte pour chaque bloc peut être déterminé expérimentalement ou être saisi au préalable par l'opérateur OP.

Dans une autre variante, un coefficient correcteur spécifique est considéré pour chaque emplacement se trouvant sur la surface SURF.

Dans le mode de réalisation décrit ici, le module 14C définit également un ou plusieurs seuils THR1 destinés à être pris en compte par le dispositif de détection 6 pour déterminer si un emplacement représenté par le modèle numérique MOD est libre ou occupé. La façon dont sont déterminés ces seuils est décrite ultérieurement.

A l'issue de l'étape F80, on obtient ainsi un modèle numérique tridimensionnel MOD représentant les différents emplacements contenus dans la surface SURF, autrement dit la configuration du parking 2 dans la zone Z représentée sur l'image IM et plus particulièrement sur la surface SURF. Dans ce modèle, chaque emplacement 3 considéré est représenté par une ou plusieurs faces qui ont été déterminées comme pertinentes pour représenter cet emplacement à l'étape F80.

Le modèle numérique MOD est ensuite fourni par l'ordinateur 14, via son moyen de connexion 14A, au dispositif de détection 6 (étape F90). Dans le mode de réalisation décrit ici, il est transmis sous la forme d'un fichier comprenant une chaîne de caractères décrivant le modèle MOD, par exemple par une application javascript implémentée par le module 14C de l'ordinateur 14.

En référence à la figure 3, le dispositif de détection 6 obtient via le moyen de connexion 13 de la caméra vidéo 4 et son module d'obtention 6B le modèle numérique MOD transmis par l'ordinateur 14, et le stocke dans la mémoire non volatile 12 de la caméra vidéo 4 (étape E30). Il convient de noter que ce modèle numérique MOD est adapté à l'image IM acquise par le capteur d'images 5 puisqu'il a été construit à partir de cette image. Par « adapté à l'image IM », on entend ici qu'il modélise de façon précise et fiable les emplacements 3 de la zone Z représentés sur l'image IM et prend en compte les conditions de prise de vue de cette image par le capteur d'images 5 (effet de perspective notamment).

Dans le mode de réalisation décrit ici, l'ordinateur 14 transmet également au dispositif de détection 6 d'autres informations telles que notamment une adresse de joignabilité de la plateforme de service 7 (ex. son adresse IP (Internet Protocol)), une période de remontée d'informations représentatives de l'occupation des emplacements 3 à la plateforme de service 7, etc. Ces informations sont stockées par le module d'obtention 6B du dispositif de détection dans la mémoire 12 de la caméra vidéo 4.

Ceci achève la configuration du dispositif de détection 6. A partir de ce moment-là, la caméra vidéo 4 et plus particulièrement le dispositif de détection 6 peut envoyer des données à la plateforme de service 7 (ex. images vidéo acquises, nombre de places disponibles dans le parking 2, etc.). Si besoin, la configuration du dispositif de détection 6 peut être modifiée à distance.

Ainsi par exemple, en utilisant l'adresse de joignabilité de la plateforme de service 7, le dispositif de détection 6 peut vérifier si un nouveau fichier de configuration est disponible et le télécharger le cas échéant, via le réseau de télécommunications 8, et prendre en compte les modifications en résultant dans les plus brefs délais. Ce nouveau fichier de configuration peut notamment comprendre une mise à jour du modèle numérique MOD en cas de déplacement du capteur d'images 5 ou de nouvelle configuration du parking, ou il peut également comprendre une nouvelle adresse de joignabilité de la plateforme de service 7. Cette configuration à distance de la caméra 4 évite une intervention in situ qui peut s'avérer difficile à mettre en oeuvre (on évite ainsi l'utilisation d'une nacelle pour atteindre la caméra lorsque celle-ci est en hauteur).

On s'assure ainsi que le modèle numérique MOD utilisé par le dispositif de détection 6 est toujours adapté à l'image acquise par le capteur d'images 5 qu'il traite pour déterminer à un instant donné l'état d'occupation des emplacements de la surface SURF située dans la zone Z.

Nous allons maintenant décrire comment l'état d'occupation de ces emplacements est déterminé par le dispositif de détection 6. On se limite ici à deux états d'occupation possibles à savoir « libre » (ou vacant ou disponible, etc.) ou « occupé ». Cette détermination est réalisée, conformément à l'invention, en couplant le modèle tridimensionnel MOD précédemment construit avec un traitement appliqué à l'image IM capturée par le capteur d'images 5 à l'étape E10, puis à toute autre image de la zone Z capturée ultérieurement par le capteur d'images 5 dès lors que le modèle MOD reste adapté à cette image et décrit fidèlement la configuration du parking et des emplacements sur la surface SURF extraite de la zone Z surveillée par le capteur.

A cet effet, le dispositif de détection 6 procède tout d'abord, par l'intermédiaire de son module 6C, à une transformation de l'image IM, qui est ici une image vidéo en couleurs, en une image binaire en noir (première couleur au sens de l'invention) et blanc (seconde couleur au sens de l'invention) (étape E40).

Cette transformation de l'image IM vise à permettre l'identification des pixels de l'image qui appartiennent à des objets positionnés sur les emplacements, de sorte à déterminer si ces emplacements sont libres ou occupés.

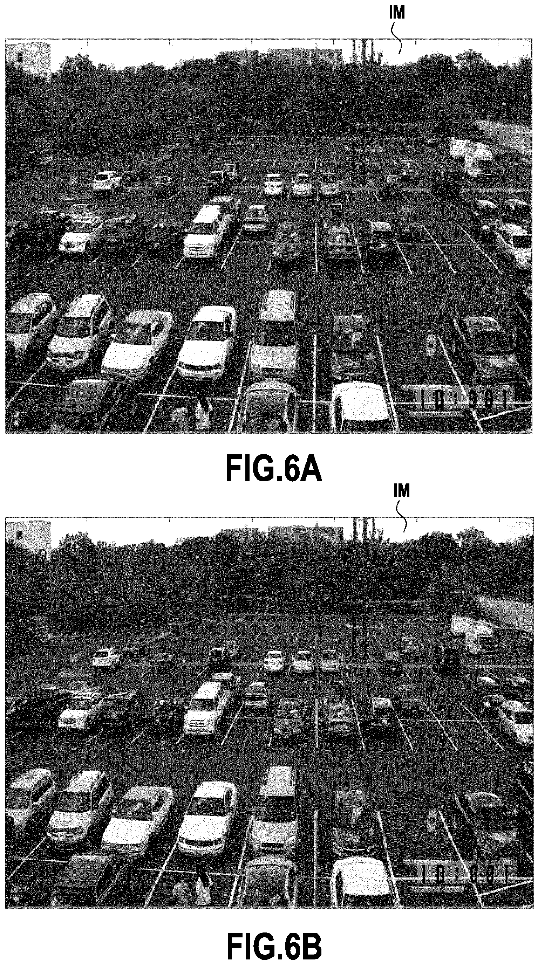

Elle se déroule, dans le mode de réalisation décrit ici, selon plusieurs étapes. Ces étapes sont illustrées sur un exemple sur les **figures 6A-6F****.** Ainsi, la figure 6A représente une image en couleurs d'une zone de parking.

L'image IM comportant trois matrices de couleurs (rouge, vert et bleu) est tout d'abord convertie par le module de transformation 6C en une image IMGrey codée en niveaux de gris comprenant ici 256 niveaux de gris, dans laquelle on associe à chaque pixel une valeur de niveau de gris représentant sa luminosité (étape E41). Cette transformation est illustrée pour l'image représentée à la figure 6A sur la figure 6B.

Puis, le module de transformation 6C procède à différentes opérations de filtrage sur l'image IMGrey ainsi obtenue.

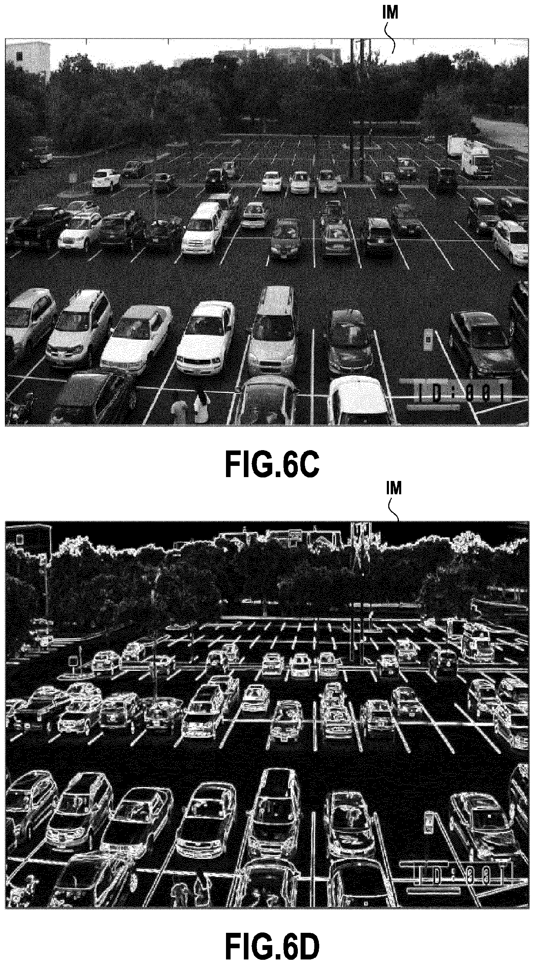

Plus particulièrement, dans le mode de réalisation décrit ici, il réalise tout d'abord un ajustement d'intensité sur l'image IMGrey codée en niveaux de gris de sorte à centrer l'histogramme des pixels de l'image au milieu du spectre, c'est-à-dire autour du niveau de gris 128 (étape E42). La figure 6C illustre l'image obtenue après avoir ajusté l'intensité de l'image codée en niveaux de gris de la figure 6B.

Suite à cet ajustement, le module de transformation 6C met en oeuvre un traitement sur l'image codée en niveaux de gris visant à détecter et à révéler les contours des objets présents sur les emplacements de la zone Z de parking représentée sur l'image (étape E43). Le but de ce traitement est de faire apparaître les contours des véhicules garés sur les emplacements 3. Il consiste plus particulièrement à sélectionner les points aux frontières des objets détectés sur l'image qui présentent une variation (ou gradient) de niveaux de gris (i.e. de contraste) importante (i.e. supérieure à un seuil prédéterminé) : ces points traduisant des changements soudains de luminosité sont attribués aux contours (bords) des objets (i.e. des véhicules ici). Ce traitement peut être réalisé par le module de transformation 6C en appliquant à l'image IMGrey dont l'intensité a été ajustée un filtre de Sobel ou un filtre de Prewitt, bien connus de l'homme du métier. Le module de transformation 6C obtient à l'issue de ce traitement une image IMProc. Il convient de noter que cette image IMProc est toujours une image codée en niveaux de gris, comme illustré à la figure 6D.

Puis il procède à une opération de seuillage sur l'image IMProc permettant de transformer l'image IMProc en une image noir et blanc IMBin (étape E44). Cette opération consiste à attribuer aux pixels ayant un niveau de gris supérieur à un seuil déterminé THR2 la couleur blanche et aux autres pixels la couleur noire. Bien entendu, une convention inverse peut être envisagée.

Le seuil THR2 peut être déterminé de diverses manières. Ainsi, par exemple, il peut être déterminé à partir de l'histogramme de l'image IMProc et choisi égal à la valeur moyenne de cet histogramme. Cette hypothèse n'est toutefois pas restrictive et d'autres façons de déterminer le seuil THR2 peuvent être envisagées.

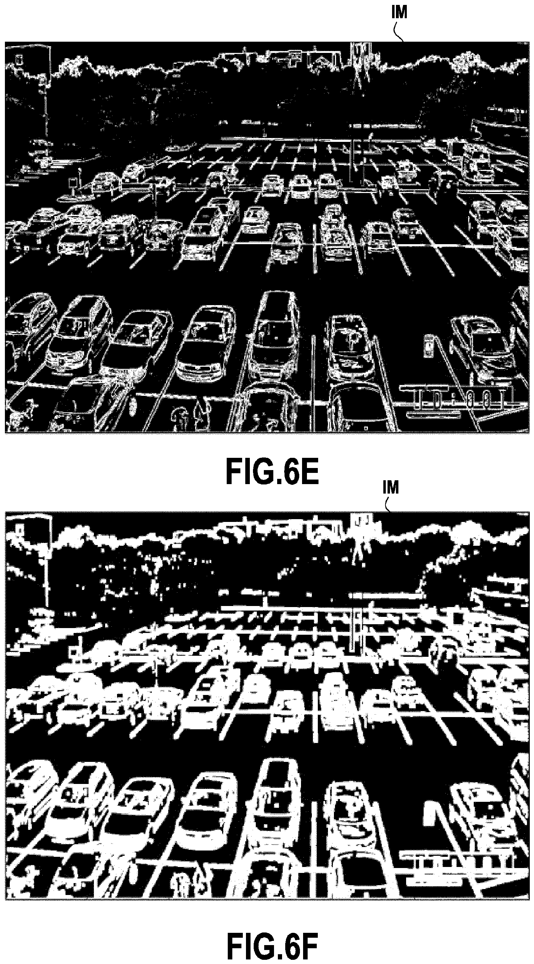

La figure 6E illustre une image obtenue par seuillage de l'image représentée à la figure 6D.

Suite à cette opération de seuillage, le module de transformation 6C réalise une dilatation de l'image IMBin (étape E45). Cette dilatation consiste à amplifier le nombre de pixels de l'image IMBin représentatifs des contours des objets représentés sur l'image (i.e. véhicules ici) en appliquant des règles de continuité. L'image obtenue est notée IMBinD. La figure 6F illustre le résultat d'une telle dilatation mise en oeuvre sur l'image de la figure 6E.

On note que la conversion de l'image IM en une image codée en niveaux de gris (étape E41), l'ajustement d'intensité (étape E42), la révélation des contours des objets présents sur l'image (étape E43), le seuillage (étape E44) et la dilatation (étape E45) sont des techniques de traitement d'images bien connues de l'homme du métier. Elles sont décrites notamment dans le document de Gilles Burel intitulé « Introduction au traitement d'images - simulation sous Matlab », 2001, et ne sont pas détaillées davantage ici.

En variante, seulement certaines des étapes précitées peuvent être mises en oeuvre ou d'autres techniques de traitement d'images, également décrites dans ce document, peuvent être utilisées pour filtrer l'image IM et la transformer en une image binaire noir et blanc.

L'image IMBinD obtenue par le dispositif de détection 6 à l'issue de l'étape de dilatation E45 distingue les zones contrastées par des pixels blancs (ex. contour des véhicules) des zones non contrastées par des pixels noirs (ex. emplacements vides).

Suite à la transformation de l'image IM, le dispositif de détection 6 analyse l'image en noir et blanc obtenue IMBinD afin de déterminer si les emplacements représentés sur cette image sont occupés ou libres. Il utilise à cet effet le modèle numérique MOD précédemment obtenu qui définit les volumes des emplacements à considérer.

Plus précisément, le dispositif de détection 6, par l'intermédiaire de son module de comptage 6D, compte ici pour chaque emplacement 3 représenté par le modèle numérique MOD sur la surface SURF, les pixels blancs de l'image IMBinD appartenant aux faces sélectionnées dans le modèle numérique MOD pour cet emplacement (étape E50).

Ainsi, dans l'exemple envisagé précédemment, pour les emplacements du bloc BLOC1 et du bloc BLOC2 représentés par le modèle numérique MOD, il compte le nombre de pixels blancs situés sur les faces latérales gauche et droite, sur la face de base au sol et sur la face du fond délimitant chaque emplacement. Pour les emplacements appartenant aux blocs BLOC3 et BLOC4, il compte le nombre de pixels blancs situés sur les faces latérales gauche et droite et sur la face du fond délimitant chaque emplacement.

En variante, le dispositif de détection 6 peut compter les pixels de couleur noire ou les pixels de couleur blanche et les pixels de couleur noire pour chaque emplacement.

Puis le dispositif de détection 6, par l'intermédiaire de son module de détection 6E, compare, pour chaque emplacement 3 représenté par le modèle numérique, le nombre de pixels blancs compté par le module de comptage 6D à un seuil THR1 prédéterminé pour détecter l'état d'occupation de cet emplacement 3 (libre ou occupé) (étape test E60). Ce seuil THR1 est ici paramétré dans le modèle numérique MOD, comme mentionné précédemment.

Dans le mode de réalisation décrit ici, le seuil THR1 dépend du nombre de faces délimitant le volume associé à l'emplacement sur lequel sont comptés les pixels. Ainsi, dans l'exemple envisagé précédemment, le module de détection 6E considère un seuil THR1(1,2) défini pour les emplacements des blocs BLOC1 et BLOC2 et un seuil THR1(3,4) défini pour les emplacements des blocs BLOC3 et BLOC4.

En variante, le seuil THR1 peut dépendre d'autres paramètres, et peut notamment différer d'un emplacement à l'autre.

Par exemple, il peut dépendre de la surface occupée par les faces considérées pour chaque emplacement. En effet, si l'on considère le modèle MOD illustré à la figure 5E, on note que pour les emplacements situés dans le bloc BLOC1 la face de base au sol est importante pour déterminer si un emplacement est occupé ou libre et que le nombre de pixels blancs qu'elle contient est déterminant par rapport aux emplacements occupant les blocs suivants (cette face n'est par ailleurs pas considérée pour ici les emplacements des blocs BLOC3 et BLOC4). Autrement dit, sur les emplacements situés au premier plan (dans le BLOC1 par exemple), il est possible de distinguer sur la face au sol les pixels non occupés des pixels occupés par un véhicule. Au fur et à mesure qu'on s'éloigne, la surface au sol non occupée devient plus petite et les pixels occupés par le véhicule sont prédominants (il se peut même qu'on ne distingue plus sur la face au sol des pixels inoccupés, comme pour le bloc BLOC4). Dans ce cas, le rapport du nombre de pixels occupés sur le nombre total de pixels est plus élevé naturellement et il peut donc être pertinent de ne pas considérer le même seuil que pour les emplacements situés au premier plan (ex. bloc BLOC1).

Le ou les seuils THR1 peuvent être déterminés expérimentalement. La définition d'un seuil par rapport à un autre peut se faire à l'aide de coefficients correcteurs (ex. des nombres réels compris entre 0 et 1), ces coefficients pouvant être en outre paramétrés par l'opérateur OP. Ils peuvent en outre être mis à jour à la volée par le biais d'un fichier de configuration placé sur la plateforme de service 7 tel que décrit précédemment, et téléchargé par le dispositif de détection 6 pour mettre à jour le modèle numérique MOD.

Si le module de détection 6E détermine que pour un emplacement 3 donné, le nombre de pixels blancs comptabilisé pour cet emplacement est supérieur au seuil THR1 défini pour cet emplacement (ou ici pour le bloc auquel appartient l'emplacement) (réponse oui au test E60), alors il détecte que cet emplacement est dans un état d'occupation « occupé » (étape E70). Pour rappel en effet, les pixels blancs sont associés dans l'image IMBinD à la présence d'un objet sur l'image autrement dit à un état « occupé », tandis que les pixels noirs sont associés à un état « libre ».

Inversement si le module de détection 6E détermine que pour un emplacement 3 donné, le nombre de pixels blancs comptabilisé pour cet emplacement est inférieur au seuil THR1 défini pour cet emplacement (ou ici pour le bloc auquel appartient l'emplacement) (réponse non au test E60), alors il détecte que cet emplacement est dans un état d'occupation « libre » (étape E80).

Il convient de noter que pour améliorer la précision de la détection réalisée par l'invention et sa fiabilité, l'état d'occupation obtenu pour un emplacement à l'issue de l'étape E70 ou E80 pour une image prise à un instant t peut être comparé avec un état d'occupation obtenu lors de l'analyse d'une image précédente (ex. image prise à un instant t-1). La comparaison avec un état d'occupation à un instant précédent peut permettre en effet d'affiner la prise de décision en analysant pour chaque emplacement et ses voisins, la stabilité des calculs dans le temps et les variations. La fréquence d'analyse des images est bien entendu paramétrable.

Dans le mode de réalisation décrit ici, après avoir déterminé pour chaque emplacement 3 représenté par le modèle numérique MOD l'état d'occupation de cet emplacement, le module de détection 6E comptabilise le nombre d'emplacements 3 dans un état « libre » (étape E90). Le dispositif de détection 6 transmet cette information, par l'intermédiaire de son module d'envoi 6F et des moyens de communication 13 de la caméra vidéo 4 à la plateforme de service 7 via le réseau de télécommunications 8 (étape E100). Le nombre d'emplacements 3 disponibles est une information représentative d'un état d'occupation d'au moins un emplacement de la zone surveillée au sens de l'invention.

La plateforme de service 7 peut alors communiquer cette information à l'utilisateur U pour faciliter sa recherche d'un emplacement disponible.

En variante d'autres informations peuvent être transmises par le dispositif de détection 6 à la plateforme de service 7, comme par exemple la localisation des emplacements disponibles.

Il convient de noter que les images considérées lors de la description de l'invention à titre illustratif représentent un parking extérieur. Toutefois l'invention s'applique également à des parkings intérieurs ou souterrains, moyennant un recul du capteur d'images suffisant pour gérer un nombre de places satisfaisant ou la réplication des capteurs d'images pour couvrir le parking.

En outre, le capteur d'images utilisé pour l'invention (ex. caméra vidéo) peut également être utilisé pour d'autres applications, comme par exemple pour de la vidéo surveillance qui est un service complémentaire couramment utilisé dans la gestion des parkings ou encore pour de l'aide à la navigation urbaine afin de permettre à un utilisateur de choisir un parking parmi une pluralité de parkings en fonction du nombre d'emplacements libres signalés pour chaque parking.

## Revendications

1. Procédé de détection d'un état d'occupation d'au moins un emplacement (3) se trouvant dans une zone surveillée (Z,SURF) par un capteur d'images (5), le procédé de détection comprenant :
- une étape d'obtention (E10) d'une image de la zone surveillée acquise par le capteur d'images ;
- une étape d'obtention (E30) d'un modèle numérique (MOD) adapté à l'image et représentant des emplacements délimités dans la zone surveillée ;
- une étape de transformation (E40) de l'image en une image binaire comprenant des pixels d'une première couleur associée à un premier état d'occupation et des pixels d'une seconde couleur associée à un second état d'occupation ;
- une étape de comptage (E50) sur l'image binaire, pour au moins un emplacement représenté par le modèle numérique, d'un nombre de pixels appartenant à au moins une partie d'un volume associé à cet emplacement par le modèle numérique et ayant une couleur sélectionnée parmi la première et la seconde couleur ; et
- une étape de détection (E60,E70,E80) d'un état d'occupation dudit au moins un emplacement en comparant le nombre de pixels compté pour cet emplacement par rapport à un seuil prédéterminé (THR1) ;
**caractérisé en ce que** le modèle numérique (MOD) est un modèle tridimensionnel représentant un emplacement de la zone surveillée à l'aide d'au moins une face délimitant le volume associé à cet emplacement, ladite au moins une partie sur laquelle est compté le nombre de pixels lors de l'étape de comptage comprenant au moins une dite face délimitant le volume associé à cet emplacement.

2. Procédé de détection selon la revendication 1 dans lequel le seuil prédéterminé (THR1) dépend du nombre de faces délimitant le volume associé à l'emplacement sur lequel sont comptés les pixels et/ou d'une surface occupée par lesdites faces.

3. Procédé de détection selon la revendication 1 ou 2 dans lequel ladite au moins une face sur laquelle est compté le nombre de pixels lors de l'étape de comptage dépend d'une perspective de la zone surveillée sur l'image et/ou de la position de l'emplacement sur l'image.

4. Procédé de détection selon l'une quelconque des revendications 1 à 3 dans lequel l'étape de transformation de l'image comprend :
- l'obtention (E41) d'une image codée en niveaux de gris à partir de l'image acquise par le capteur d'images ;
- l'application (E43) d'un traitement à l'image codée en niveaux de gris de sorte à révéler des contours d'objets présents dans la zone surveillée ; et
- la transformation (E44) de l'image traitée en une image binaire en noir et blanc.

5. Procédé de détection selon la revendication 4 dans lequel l'étape de transformation de l'image comprend en outre la dilation (E45) de l'image binaire en noir et blanc de sorte à amplifier un nombre de pixels représentatifs des contours des objets présents dans la zone surveillée.

6. Procédé de détection selon la revendication 4 ou 5 dans lequel l'étape de transformation de l'image comprend en outre l'ajustement (E42) d'une intensité de l'image codée en niveaux de gris avant l'application du traitement.

7. Procédé de détection selon l'une quelconque des revendications 1 à 6 comprenant en outre :
- une étape de comptage (E90) d'un nombre d'emplacements de ladite zone surveillée se trouvant dans le premier état d'occupation et/ou d'un nombre d'emplacements de ladite zone surveillée se trouvant dans le second état d'occupation ; et
- une étape de transmission (E100) de ce nombre à une plateforme de service apte à gérer la zone surveillée.

8. Procédé de détection selon l'une quelconque des revendications 1 à 7 comprenant en outre une étape de comparaison de l'état d'occupation détecté dudit au moins un emplacement avec un état d'occupation détecté précédemment pour ledit au moins un emplacement.

9. Procédé de détection selon l'une quelconque des revendications 1 à 8 comprenant en outre une étape de construction du modèle numérique à partir de l'image acquise par le capteur d'images, cette étape de construction comprenant :
- la sélection (F40) sur l'image d'une surface (SURF) comprenant une pluralité d'emplacements représentés dans leur intégralité sur l'image ;
- la construction (F50) d'un premier maillage (M1) sur la surface délimitant les emplacements ;
- la construction (F60) à partir du premier maillage d'un deuxième maillage (M2) dans un plan parallèle à un plan du premier maillage ;
- la définition (F70) du volume associé à chaque emplacement à partir du premier maillage et du deuxième maillage ; et
- la sélection (F80) d'au moins une face délimitant le volume associé à chaque emplacement pour représenter cet emplacement.

10. Programme d'ordinateur comportant des instructions pour l'exécution des étapes du procédé de détection selon l'une quelconque des revendications 1 à 8 lorsque ledit programme est exécuté par un ordinateur.

11. Support d'enregistrement lisible par un ordinateur sur lequel est enregistré un programme d'ordinateur comprenant des instructions pour l'exécution des étapes du procédé de détection selon l'une quelconque des revendications 1 à 8.

12. Dispositif (6) de détection d'un état d'occupation d'au moins un emplacement se trouvant dans une zone surveillée par un capteur d'images, ce dispositif de détection comprenant :
- un module (6A) d'obtention d'une image de la zone surveillée acquise par le capteur d'images ;
- un module (6B) d'obtention d'un modèle numérique adapté à l'image et représentant des emplacements délimités dans la zone surveillée ;
- un module (6C) de transformation de l'image en une image binaire comprenant des pixels d'une première couleur associée à un premier état d'occupation et des pixels d'une seconde couleur associée à un second état d'occupation ;
- un module (6D) de comptage sur l'image binaire, pour au moins un emplacement représenté par le modèle numérique, d'un nombre de pixels appartenant à au moins une partie d'un volume associé à cet emplacement par le modèle numérique et ayant une couleur sélectionnée parmi la première et la seconde couleur ; et
- un module (6E) de détection d'un état d'occupation dudit au moins un emplacement en comparant le nombre de pixels compté pour cet emplacement par rapport à un seuil prédéterminé ;
**caractérisé en ce que** le modèle numérique (MOD) est un modèle tridimensionnel représentant un emplacement de la zone surveillée à l'aide d'au moins une face délimitant le volume associé à cet emplacement, ladite au moins une partie sur laquelle est compté le nombre de pixels lors de l'étape de comptage comprenant au moins une dite face délimitant le volume associé à cet emplacement.

13. Caméra vidéo (4) comprenant :
- un capteur d'images (5) apte à acquérir au moins une image d'une zone surveillée par l'unité de surveillance ; et
- un dispositif de détection (6) selon la revendication 12 apte à obtenir ladite image et à détecter à partir de cette image un état d'occupation d'au moins un emplacement se trouvant dans la zone surveillée.

14. Système de surveillance (1) comprenant :
- au moins un capteur d'images (5) ; et
- un dispositif (6) selon la revendication 12 de détection d'un état d'occupation d'au moins un emplacement se trouvant dans une zone surveillée par ledit au moins un capteur d'images.

15. Système de surveillance (1) selon la revendication 14 comprenant en outre une plateforme de service (7) apte à gérer la zone surveillée, et dans lequel :
- le dispositif de détection comprend en outre un module de transmission (6F) à la plateforme de service d'une information représentative d'un état d'occupation d'au moins un emplacement de la zone surveillée ; et
- la plateforme de service comprend un module de traitement de cette information.

16. Système selon l'une quelconque des revendications 14 ou 15 dans lequel le dispositif de détection est configurable à distance.

## Patentansprüche

1. Verfahren zum Erkennen eines Besetztzustands von wenigstens einer in einem überwachten Bereich (Z,SURF) befindlichen Stelle (3) durch einen Bildsensor (5), wobei das Verfahren zum Erkennen umfasst:
- einen Schritt zum Erhalten (E10) eines vom Bildsensor erfassten Bilds des überwachten Bereichs;
- einen Schritt zum Erhalten (E30) eines an das Bild angepassten und abgegrenzte Stellen im überwachten Bereich darstellenden digitalen Modells (MOD);
- einen Schritt zum Umwandeln (E40) des Bilds in ein binäres Bild umfassend Pixel einer mit einem ersten Besetztzustand verknüpften ersten Farbe und Pixel einer mit einem zweiten Besetztzustand verknüpften zweiten Farbe;
- einen Schritt zum Zählen (E50) einer Zahl von zu wenigstens einem Teil eines durch das digitale Modell mit dieser Stelle verknüpften Volumens gehörigen und eine Farbe gewählt aus der Gruppe umfassend die erste und die zweite Farbe aufweisenden Pixeln auf dem digitalen Bild für wenigstens eine vom digitalen Modell dargestellte Stelle; und
- einen Schritt zum Erkennen (E60, E70, E80) eines Besetztzustands der wenigstens einen Stelle durch Vergleichen der gezählten Zahl von Pixeln für diese Stelle mit einer vorgegebenen Schwelle (THR1);
**dadurch gekennzeichnet**
**dass** das digitale Modell (MOD) ein eine Stelle des überwachten Bereichs mit Hilfe von wenigstens einer das mit dieser Stelle verknüpfte Volumen abgrenzenden Seite darstellendes dreidimensionales Modell ist, wobei der wenigstens eine Teil, in dem die Zahl von Pixeln während des Schritts zum Zählen gezählt wird, wenigstens die eine das mit der Stelle verknüpfte Volumen abgrenzende Seite umfasst.

2. Verfahren zum Erkennen nach Anspruch 1, wobei die vorgegebene Schwelle (THR1) von der Zahl von das mit der Stelle verknüpfte Volumen, in dem die Pixel gezählt werden, abgrenzenden Seiten und/oder einer von den Seiten eingenommenen Fläche abhängt.

3. Verfahren zum Erkennen nach Anspruch 1 oder 2, wobei die wenigstens eine Seite, auf der die Zahl von Pixeln während des Schritts zum Zählen gezählt wird, von einer Perspektive des überwachten Bereichs auf dem Bild und/oder der Position der Stelle auf dem Bild abhängt.

4. Verfahren nach einem der Ansprüche 1 bis 3, wobei der Schritt zum Umwandeln des Bilds umfasst:
- das Erhalten (E41) eines in Graustufen codierten Bilds aus dem vom Bildsensor erfassten Bild;
- die Anwendung (E43) einer Behandlung am in Graustufen codierten Bild, um im überwachten Bereich vorhandene Objektkonturen aufzudecken; und
- die Umwandlung (E44) des behandelten Bilds in ein binäres Schwarzweißbild.

5. Verfahren zum Erkennen nach Anspruch 4, wobei der Schritt zum Umwandeln des Bilds ferner die Vergrößerung (E45) des binären Schwarzweißbilds umfasst, um eine Zahl von für die Konturen der im überwachten Bereich vorhandenen Objekte repräsentativen Pixeln zu verstärken.

6. Verfahren zum Erkennen nach Anspruch 4 oder 5, wobei der Schritt zum Umwandeln des Bilds ferner das Anpassen (E42) einer Stärke des in Graustufen codierten Bilds vor der Anwendung der Behandlung umfasst.

7. Verfahren zum Erkennen nach einem der Ansprüche 1 bis 6, ferner umfassend:
- einen Schritt zum Zählen (E90) einer Zahl von sich im ersten Besetztzustand befindlichen Stellen des überwachten Bereichs und/oder einer Zahl von sich im zweiten Besetztzustand befindlichen Stellen; und
- einen Schritt zum Übertragen (E100) dieser Zahl an eine zum Verwalten des überwachten Bereichs fähige Serviceplattform.

8. Verfahren zum Erkennen nach einem der Ansprüche 1 bis 7, umfassend ferner einen Schritt zum Vergleichen des erkannten Besetztzustands der wenigstens einen Stelle mit einem zuvor für die wenigstens eine Stelle erkannten Besetztzustand.

9. Verfahren zum Erkennen nach einem der Ansprüche 1 bis 8, umfassend ferner einen Schritt zum Erzeugen des digitalen Modells aus dem vom Bildsensor erfassten Bild, wobei dieser Schritt zum Erzeugen erfasst:
- die Auswahl (F40) einer Fläche (SURF) umfassend eine Vielzahl von insgesamt auf dem Bild dargestellten Stellen auf dem Bild;
- das Erzeugen (F50) eines ersten Gitters (M1) auf der Fläche zum Abgrenzen der Stellen;
- das Erzeugen (F60) eines zweiten Gitters (M2) aus dem ersten Gitter auf einer Ebene parallel zu einer Ebene des ersten Gitters;
- das Definieren (F70) des mit jeder Stelle verknüpften Volumens aus dem ersten Gitter und dem zweiten Gitter; und
- die Auswahl (F80) von wenigstens einer das mit jeder Stelle verknüpfte Volumen abgrenzenden Seite zum Darstellen dieser Stelle.

10. Computerprogramm umfassend Anweisungen zum Ausführen der Schritte des Verfahrens zum Erkennen nach einem der Ansprüche 1 bis 8, wenn das Programm auf einem Computer ausgeführt wird.

11. Von einem Computer lesbares Speichermedium, auf dem ein Computerprogramm umfassend Anweisungen zum Ausführen der Schritte des Verfahrens zum Erkennen nach einem der Ansprüche 1 bis 8 gespeichert ist.

12. Vorrichtung (6) zum Erkennen eines Besetztzustands von wenigstens einer in einem überwachten Bereich befindlichen Stelle durch einen Bildsensor, wobei die Vorrichtung zum Erkennen umfasst:
- ein Modul (6A) zum Erhalten eines vom Bildsensor erfassten Bilds des überwachten Bereichs;
- ein Modul (6B) zum Erhalten eines an das Bild angepassten und abgegrenzte Stellen im überwachten Bereich darstellenden digitalen Modells;
- ein Modul (6C) zum Umwandeln des Bilds in ein binäres Bild umfassend Pixel einer mit einem ersten Besetztzustand verknüpften ersten Farbe und Pixel einer mit einem zweiten Besetztzustand verknüpften zweiten Farbe;
- ein Modul (6D) zum Zählen einer Zahl von zu wenigstens einem Teil eines durch das digitale Modell mit dieser Stelle verknüpften Volumens gehörigen und eine Farbe gewählt aus der Gruppe umfassend die erste und die zweite Farbe aufweisenden Pixeln auf dem digitalen Bild für wenigstens eine vom digitalen Modell dargestellte Stelle; und
- ein Modul (6E) zum Erkennen eines Besetztzustands der wenigstens einen Stelle durch Vergleichen der gezählten Zahl von Pixeln für diese Stelle mit einer vorgegebenen Schwelle;
**dadurch gekennzeichnet**
**dass** das digitale Modell (MOD) ein eine Stelle des überwachten Bereichs mit Hilfe von wenigstens einer das mit dieser Stelle verknüpfte Volumen abgrenzenden Seite darstellendes dreidimensionales Modell ist, wobei der wenigstens eine Teil, in dem die Zahl von Pixeln während des Schritts zum Zählen gezählt wird, wenigstens die eine das mit der Stelle verknüpfte Volumen abgrenzende Seite umfasst.

13. Videokamera (4) umfassend:
- einen zum Erfassen von wenigstens einem Bild eines überwachten Bereichs durch die Überwachungseinheit fähigen Bildsensor (5); und
- eine zum Erhalten des Bilds und zum Erkennen eines Besetztzustands von wenigstens einer im überwachten Bereich befindlichen Stelle aus diesem Bild fähige Vorrichtung zum Erkennen (6) nach Anspruch 12.

14. Überwachungssystem (1) umfassend:
- wenigstens einen Bildsensor (5); und
- eine Vorrichtung (6) nach Anspruch 12 zum Erkennen eines Besetztzustands von wenigstens einer in einem überwachten Bereich befindlichen Stelle durch den wenigstens einen Bildsensor.

15. Überwachungssystem (1) nach Anspruch 14 umfassend ferner eine zum Verwalten des überwachten Bereichs fähige Serviceplattform (7), wobei:
- die Vorrichtung zum Erkennen ferner ein Modul zum Übertragen (6F) einer für einen Besetztzustand von wenigstens einer Stelle des überwachten Bereichs repräsentativen Information zur Serviceplattform umfasst; und
- die Serviceplattform ein Modul zum Verarbeiten dieser Information umfasst.

16. System nach Anspruch 14 oder 15, wobei die Vorrichtung zum Erkennen fernkonfigurierbar ist.

## Claims

1. Method for detecting an occupancy state of at least one location (3) situated in a zone (Z,SURF) monitored by an image sensor (5), the detection method comprising:
- a step (E10) of obtaining an image of the monitored zone acquired by the image sensor;
- a step (E30) of obtaining a numerical model (MOD) suited to the image and representing locations delimited in the monitored zone;
- a step (E40) of transforming the image into a binary image comprising pixels of a first colour associated with a first occupancy state and pixels of a second colour associated with a second occupancy state;
- a step (E50) of counting on the binary image, for at least one location represented by the numerical model, a number of pixels belonging to at least one part of a volume associated with this location by the numerical model and having a colour selected from among the first and the second colour; and
- a step (E60,E70,E80) of detecting an occupancy state of the said at least one location by comparing the number of pixels counted for this location with respect to a predetermined threshold (THR1);
**characterized in that**
the numerical model (MOD) is a three-dimensional model representing a location of the zone monitored with the aid of at least one face delimiting the volume associated with this location, the said at least one part on which the number of pixels is counted during the counting step comprising at least one said face delimiting the volume associated with this location.

2. Detection method according to Claim 1, in which the predetermined threshold (THR1) depends on the number of faces delimiting the volume associated with the location on which the pixels are counted and/or a surface area occupied by the said faces.

3. Detection method according to Claim 1 or 2, in which the said at least one face on which the number of pixels is counted during the counting step depends on a perspective of the monitored zone on the image and/or the position of the location on the image.

4. Detection method according to any one of Claims 1 to 3, in which the step of transforming the image comprises:
- the obtaining (E41) of a grey-scale-coded image on the basis of the image acquired by the image sensor;
- the application (E43) of a processing to the grey-scale-coded image so as to reveal contours of objects present in the monitored zone; and
- the transformation (E44) of the processed image into a black and white binary image.

5. Detection method according to Claim 4, in which the step of transforming the image furthermore comprises the dilation (E45) of the black and white binary image so as to amplify a number of pixels that are representative of the contours of the objects present in the monitored zone.

6. Detection method according to Claim 4 or 5, in which the step of transforming the image furthermore comprises the adjusting (E42) of an intensity of the grey-scale-coded image before the application of the processing.

7. Detection method according to any one of Claims 1 to 6, furthermore comprising:
- a step (E90) of counting a number of locations of the said monitored zone in the first occupancy state and/or of a number of locations of the said monitored zone in the second occupancy state; and
- a step (E100) of transmitting this number to a service platform able to manage the monitored zone.

8. Detection method according to any one of Claims 1 to 7, furthermore comprising a step of comparing the detected occupancy state of the said at least one location with an occupancy state detected previously for the said at least one location.

9. Detection method according to any one of Claims 1 to 8, furthermore comprising a step of constructing the numerical model on the basis of the image acquired by the image sensor, this construction step comprising:
- the selection (F40) on the image of a surface (SURF) comprising a plurality of locations represented in their entirety on the image;
- the construction (F50) of a first mesh (M1) on the surface delimiting the locations;
- the construction (F60) on the basis of the first mesh of a second mesh (M2) in a plane parallel to a plane of the first mesh;
- the definition (F70) of the volume associated with each location on the basis of the first mesh and of the second mesh; and
- the selection (F80) of at least one face delimiting the volume associated with each location to represent this location.

10. Computer program comprising instructions for the execution of the steps of the detection method according to any one of Claims 1 to 8 when the said program is executed by a computer.

11. Recording medium readable by a computer on which is recorded a computer program comprising instructions for the execution of the steps of the detection method according to any one of Claims 1 to 8.

12. Device (6) for detecting an occupancy state of at least one location situated in a zone monitored by an image sensor, this detection device comprising:
- a module (6A) for obtaining an image of the monitored zone acquired by the image sensor;
- a module (6B) for obtaining a numerical model suited to the image and representing locations delimited in the monitored zone;
- a module (6C) for transforming the image into a binary image comprising pixels of a first colour associated with a first occupancy state and pixels of a second colour associated with a second occupancy state;
- a module (6D) for counting on the binary image, for at least one location represented by the numerical model, a number of pixels belonging to at least one part of a volume associated with this location by the numerical model and having a colour selected from among the first and the second colour; and
- a module (6E) for detecting an occupancy state of the said at least one location by comparing the number of pixels counted for this location with respect to a predetermined threshold;
**characterized in that**
the numerical model (MOD) is a three-dimensional model representing a location of the zone monitored with the aid of at least one face delimiting the volume associated with this location, the said at least one part on which the number of pixels is counted during the counting step comprising at least one said face delimiting the volume associated with this location.

13. Video camera (4) comprising:
- an image sensor (5) able to acquire at least one image of a zone monitored by the monitoring unit; and
- a detection device (6) according to Claim 12 able to obtain the said image and to detect on the basis of this image an occupancy state of at least one location situated in the monitored zone.

14. Monitoring system (1) comprising:
- at least one image sensor (5); and
- a device (6) according to Claim 12 for detecting an occupancy state of at least one location situated in a zone monitored by the said at least one image sensor.

15. Monitoring system (1) according to Claim 14, furthermore comprising a service platform (7) able to manage the monitored zone, and in which:
- the detection device furthermore comprises a module (6F) for transmitting to the service platform an information item representative of an occupancy state of at least one location of the monitored zone; and
- the service platform comprises a module for processing this information item.

16. System according to either one of Claims 14 and 15, in which the detection device is remotely configurable.
